Europäisches Patentamt

(19) European Patent Office  (11) Publication number: **0 202 954**

Office européen des brevets  **B1**

(12) **EUROPEAN PATENT SPECIFICATION**

(45) Date of publication of the patent specification:  (51) Int. Cl.⁴: **B 65 D 65/40,** B 65 D 1/18,
13.09.89  B 32 B 27/08, B 32 B 27/28

(21) Application number: **86303968.1**

(22) Date of filing: **23.05.86**

(54) **Laminates.**

(30) Priority: **24.05.85 JP 110546/85**

(43) Date of publication of application:
**26.11.86 Bulletin 86/48**

(45) Publication of the grant of the patent:
**13.09.89 Bulletin 89/37**

(84) Designated Contracting States:
**BE DE FR GB IT NL**

(56) References cited:
**US-A-4 451 512**

(73) Proprietor: **MITSUI PETROCHEMICAL
INDUSTRIES, LTD., 2-5, Kasumigaseki 3-chome
Chiyoda- ku, Tokyo 100 (JP)**

(72) Inventor: **Nakagawa, Mikio, 232- 6, Ohno- cho,
Saiki- gun Hiroshima- ken (JP)**
Inventor: **Sato, Koichiro, 4-8, Waki 2-chome Waki-
machi, Kuga- gun Yamaguchi- ken (JP)**
Inventor: **Kanemoto, Kuniaki, 12- 45, Ushinoya- cho
2-chome, Iwakuni- shi Yamaguchi- ken (JP)**
Inventor: **Nishimura, Akito, 1648, Hashirano,
Iwakuni- shi Yamaguchi- ken (JP)**

(74) Representative: **Myerscough, Philip Boyd,
J.A.Kemp & Co. 14, South Square Gray's Inn,
London, WC1R 5EU (GB)**

**Description**

This invention relates to a laminated structure composed of a plurality of polymer layers. More specifically, it relates to a laminated structure which comprises a polycarbonate layer and a saponified ethylene/vinyl acetate copolymer layer and has transparency and resistance to permeation to gases and excellent delamination strength, particularly excellent delamination strength after heat treatment.

Polycarbonate is a resin having excellent transparency, flavor retaining property and heat resistance. But since its permeability to gases such as oxygen is high, it is unsuitable for use as a packaging material which requires high resistance to gas permeation, for example packaging materials for foods, chemicals and cosmetics.

Lamination of a saponified ethylene/vinyl acetate copolymer may be considered as one means for improving resistance to gas permeation. However, this method is not practical since the polycarbonate has poor adhesion to the saponified ethylene/vinyl acetate copolymer and mere lamination leads to delamination during use.

Some methods have previously been proposed to improve the adhesion between the polycarbonate and the saponified ethylene/vinyl acetate copolymer.

Japanese Laid-Open Patent Publication No. 129 775/1974 discloses a method in which an ionomer or an ethylene/vinyl acetate copolymer is added to a saponified ethylene/vinyl acetate copolymer, and a layer of this polymer is laminated to a polycarbonate layer. According to this method, however, the transparency of the saponified ethylene/vinyl acetate copolymer layer is reduced, and the adhesion of it to the polycarbonate layer is not improved to a significant extent. Furthermore, the resulting laminated structure has markedly reduced adhesion strength on heat-treatment and becomes useless in practical applications.

U. S. Patent No. 4 058 647 proposed a method in which a blend of 60 to 95 % by weight of a modified polyolefin containing an unsaturated carboxylic acid or its anhydride in a concentration of 0.01 to 10 % by weight and 40 to 5 % by weight of a rubbery substance is laminated in the molten state to a saponified ethylene/vinyl acetate copolymer. Example 1 of this specification describes a laminate obtained by laminating a blend of 80 parts by weight of modified polypropylene composed of polypropylene having an MI of 0.8 and a specific gravity of 0.91 and 0.67 % by weight of maleic anhydride grafted thereto and 20 parts by weight of an ethylene/propylene terpolymer to a saponified ethylene/vinyl acetate copolymer. The patent states that the adhesion strength between the layers of the blend and the saponified copolymer is 11.4 kg/15 mm. However, this laminate does not have sufficient transparency.

Japanese Patent Publication No. 15 464/1985 discloses a laminated structure composed of a polycarbonate layer and a polyolefin layer comprising a modified polyolefin having grafted thereto $10^{-4}$ to 15 % by weight of maleic anhydride. Example 1 of this specification discloses that a composite bottle composed of an outside polycarbonate layer and an inside layer of a blend of 5 parts by weight of modified polyethylene having grafted thereto 2.5 % by weight of maleic anhydride and 95 parts by weight of low-density polyethylene having an MI value of 1 was produced, and the adhesion strength between the two layers of the bottle was 200 g/cm.

Japanese Laid-Open Patent Publication No. 27 975/1984 discloses an adhesive for aromatic resins comprising a modified polyolefin having an unsaturated dicarboxylic acid or its anhydride grafted thereto. The modified polyolefin has an intrinsic viscosity of 0.5 to 5 dl/g, a crystallinity of 5 to 65 % and an $\bar{M}w/\bar{M}n$ ratio of 1 to 15, and is produced by grafting 0.01 to 5 parts by weight of the unsaturated dicarboxylic acid or its anhydride to 100 parts by weight of a crystalline polyolefin having a crystallinity of 10 to 65 % and an $\bar{M}w/\bar{M}n$ ratio of 1 to 10. Example 1 of this specification discloses a three-layer laminated structure composed of a layer of high-density polyethylene having an intrinsic viscosity of 1.5 dl/g and a polycarbonate layer as outside layers and maleic anhydride-grafted ethylene/propylene copolymer having an intrinsic viscosity of 1.4 dl/g, a crystallinity of 14 %, an $\bar{M}w/\bar{M}n$ ratio of 3.1, and a melt viscosity of $3.5 \times 10^5$ poises as an interlayer. It states that the adhesion strength between the polycarbonate layer and the interlayer was 650 g/cm, and the high-density polyethylene layer could not be peeled off from the interlayer.

Japanese Laid-Open Patent Publication No. 29 160/1984 discloses a laminated molded structure having the same modified polyolefin as the modified polyolefin described in Japanese Laid-Open Patent Publication No. 27 975/1984 as an interlayer and a surface layer of a polyolefin and a substrate layer of an aromatic resin. Example 1 of this patent document discloses substantially the same laminated structure as in Example 1 of the above-cited Japanese Laid-Open Patent Publication No. 27 975/1984.

It is an object of this invention to provide a novel laminated structure.

Another object of this invention is to provide a novel laminated structure having a polycarbonate layer and a saponified ethylene/vinyl acetate copolymer layer and an interlayer having excellent adhesion strength to both of these layers.

Still another object of this invention is to provide a novel laminated structure having a polycarbonate layer and a saponified ethylene/vinyl acetate copolymer layer and an interlayer which does not impair the transparency of these two layers.

Yet another object of this invention is to provide a novel laminated structure having a polycarbonate layer and a saponified ethylene/vinyl acetate copolymer layer and an interlayer which even after heat-treatment, retains excellent adhesion to the two layers.

A further object of this invention is to provide a laminated structure having a polycarbonate layer and a saponified ethylene/vinyl acetate copolymer layer which are bonded through an interlayer of a modified ethylene/alpha-olefin random copolymer which is obtained by grafting an unsaturated carboxylic acid or its derivative and has a very low crystallinity or is amorphous.

Additional objects of the invention along with its advantages will become apparent from the following description.

According to this invention, the above objects and advantages of the invention are achieved by a laminated structure comprising, laminated in the order stated,

(A)  a layer of polycarbonate,

(B)  a layer of a modified ethylene/alpha-olefin random copolymer, the modified copolymer containing about 0.01 to 10 % by weight, based on the trunk ethylene/alpha-olefin random copolymer, of an unsaturated carboxylic acid or its derivative grafted thereto, and having an ethylene content of 75 to 95 mole %, a melt flow rate of 0.1 to 50 g/10 min., a density of 0.850 to 0.905 g/cm$^3$ and a crystallinity of less than 10 %, and

(C)  a layer of a saponified olefin/vinyl acetate copolymer.

Various polycarbonates and copolycarbonates obtained by reacting dihydroxy compounds with phosgene or diphenyl carbonate by known methods are suitably used as the polycarbonate constituing the layer (A) of the laminated structure. Aromatic dihydroxy compounds and alicyclic dihydroxy compounds are preferred as the dihydroxy compounds. Examples include hydroquinone, resorcinol 4,4'-dihydroxy-diphenylmethane, 4,4'-dihydroxy-diphenylethane, 4,4'-dihydroxydiphenyl-n-butane, 4,4'-dihydroxydiphenylheptane, 4,4'-dihydroxy-diphenylphenyl-methane, 4,4'-dihydroxy-diphenyl-2,2-propane (bisphenol A), 4,4'-dihydroxy-3,3'-dimethyl-diphenyl-2,2-propane, 4,4'-dihydroxy-3,3'-diphenyl-diphenyl-2,2-propane, 4,4'-dihydroxy-dichloro-diphenyl-2,2-propane, 4,4'-dihydroxy-diphenyl-1,1-cyclopentane, 4,4'-dihydroxy-diphenyl-1,1-cyclohexane, 4,4-dihydroxy-diphenyl-methyl-phenyl-methane, 4,4'-dihydroxy-diphenyl-ethyl-phenyl-methane, 4,4'-dihydroxy-diphenyl-2,2,2-trichloro-1,1-ethane, 2,2'-dihydroxydiphenyl, 2,6-dihydroxynaphthalene, 4,4'-dihydroxy-diphenyl ether, 4,4'-dihydroxy-3,3'-dichlorodiphenyl ether and 4,4'-dihydroxy-2,5-diethoxyphenyl ether. Polycarbonate prepared by using 4,4'-dihydroxy-diphenyl-2,2-propane (bisphenol A) is especially preferred because of its excellent mechanical properties and transparency.

The saponified olefin/vinyl acetate copolymer constituting the layer (C) of the laminated structure of the invention is preferably a saponification product of an olefin/vinyl acetate copolymer having an olefin content of 15 to 60 mole %, preferably 25 to 50 mole %. The saponification product has a degree of saponification of preferably at least 50 %, more preferably at least 90 %. If the olefin content is less than 15 mole %, the saponified copolymer tends to be not entirely satisfactory in respect of at least one of resistance to thermal decomposition, melt-moldability, stretchability and water resistance (moisture absorption and swellability). If the olefin content exceeds 60 mole % or the degree of saponification is less than 50 %, the copolymer has poor resistance to gas permeation.

Alpha-olefins having 1 to 18 carbon atoms are preferred as the olefin for forming the saponified olefin/vinyl acetate copolymer. Examples include ethylene, propylene, 1-butene, 1-hexene, 4-methyl-1-pentene, 1-octene, 1-decene, 1-tetradecene and 1-octadecene.

Saponified ethylene/vinyl acetate copolymer is especially preferred as the saponified olefin/vinyl acetate copolymer in view of its mechanical strength and moldability.

The laminated structure of this invention comprises the layer (B) of a modified ethylene/alpha-olefin random copolymer as an interlayer for firmly bonding the layers (A) and (C).

The modified ethylene/alpha-olefin random copolymer (to be sometimes referred to simply as the modified copolymer) contains about 0.01 to 10 % by weight, preferably 0.1 to 5 % by weight, based on the ethylene/alpha-olefin random copolymer as a trunk, of an unsaturated carboxylic acid or its derivative. If the amount of the unsaturated carboxylic acid or its derivative grafted is less than 0.01 % by weight, the adhesion of the interlayer to the polycarbonate layer (A) and the saponified olefin/vinyl acetate copolymer layer (C) cannot be improved. On the other hand, if it exceeds 10 % by weight, the modified copolymer is partly crosslinked and has reduced moldability, transparency and adhesion strength.

The modified copolymer has an ethylene content of 75 to 95 mole %, preferably 77 to 93 mole %.

The modified copolymer also has a melt flow rate (MFR$_2$ in accordance with ASTM D1238L) of 0.1 to 50 g/10 min., preferably 0.2 to 20 g/10 min.

The modified copolymer has a density of 0.850 to 0.905 g/cm$^3$, preferably 0.860 to 0.900 g/cm$^3$.

Finally, the modified copolymer has a crystallinity of less than 10 %, preferably less than 7 %. If the MFR$_2$ is outside the above-specified range, the modified copolymer has too high or low a melt viscosity and has poor moldability and adhesion strength.

If the modified copolymer has a density of more than 0.905 g/cm$^3$ and a crystallinity, determined by X-ray, of at least 10 %, it has reduced adhesion strength after it has been subjected to heat-treatment.

Alpha-olefins having 3 to 20 carbon atoms are usually suitable as the alpha-olefin constituting the modified copolymer. Specific examples are propylene, 1-butene, 1-hexene, 4-methyl-1-pentene, 1-octene, 1-decene, 1-tetradecene and 1-octadecene. These alpha-olefins may be used singly or in combination.

The modified copolymer of layer (B) can be produced by grafting the unsaturated carboxylic acid or its derivative to an ethylene/alpha-olefin random copolymer. The ethylene/alpha-olefin random copolymer before modification usually has a melt flow rate (MFR$_2$) of 0.1 to 70 g/10 min., and its other properties are much the same as those of the modified copolymer.

3

Examples of the unsaturated carboxylic acid or its derivative to be grafted include unsaturated carboxylic acids such as acrylic acid, maleic acid, fumaric acid, tetrahydrophthalic acid, itaconic acid, citraconic acid, crotonic acid, isocrotonic acid, and Nadic acid® (endo-cis-bicyclo[2,2,1]hept-5-ene-2,3-dicarboxylic acid; and derivatives thereof such as acid halides, amides, imides, anhydrides and esters. Specific examples of the derivatives are malenyl chloride, maleimide, maleic anhydride, citraconic anhydride, monomethyl maleate, dimethyl maleate, and glycidyl maleate. Among these, the unsaturated dicarboxylic acids and their anhydrides are preferred. Maleic acid, Nadic acid® and their anhydrides are especially preferred.

Various known methods can be used to produce the modified copolymer by grafting a grafting monomer selected from the unsaturated carboxylic acids and their derivatives to the unmodified ethylene/alpha-olefin random copolymer. For example, the unmodified ethylene/alpha-olefin random copolymer is melted and the grafting monomer is added to it and graft-copolymerized. Alternatively, the unmodified ethylene/alpha-olefin random copolymer is dissolved in a solvent, and the grafting monomer is added and graft-copolymerized. In any case, the reaction is preferably carried out in the presence of a radical initiator in order to perform graft-copolymerization with good efficiency. The grafting reaction is carried out usually at a temperature of 60 to 350°C. The proportion of the radical initiator used is usually 0.001 to 1 part by weight per 100 parts by weight of the unmodified ethylene/alpha-olefin random copolymer. The radical initiator may be an organic peroxide, an organic perester or an azo compound. Specific examples include benzoyl peroxide, dichlorobenzoyl peroxide, dicumyl peroxide, di-tert-butyl peroxide, 2,5-dimethyl-2,5-di-(peroxybenzoate)hexyne-3, 1,4-bis(tert-butylperoxyisopropyl)benzene, lauroyl peroxide, tert-butyl peracetate, 2,5-dimethyl-2,5-di(tert-butylperoxy)hexyne-3, 2,5-dimethyl-2,5-di(tert-butylperoxy)hexane, tert-butyl perbenzoate, tert-butyl perphenylacetate, tert-butyl perisobutyrate, tert-butyl per-sec-octoate, tert-butyl perpivalate, cumyl perpivalate, tert-butyl perdiethyl-acetate, azobisisobutyronitrile and dimethyl azobisisobutyrate. Among these, dialkyl peroxides such as dicumyl peroxide, di-tert-butyl peroxide, 2,5-dimethyl-2,5-di-methyl-2,5-di(tert-butylperoxy)hexane and 1,4-bis(tert-butylperoxyisopropyl)benzene are preferred.

The modified copolymer used in this invention may be mixed with an unmodified ethylene/alpha-olefin random copolymer to form the modified copolymer layer (B) of the laminated structure of the invention so long as the amount of the unsaturated carboxylic acid or its derivative grafted in the mixutre is in the range of 0.01 to 10 % by weight. Furthermore, the modified copolymer used in this invention may be mixed with a modified or unmodified ethylene/alpha-olefin random copolymer having a crystallinity of at least 10 % to form the modified copolymer layer (B) of the laminated structure of the invention so long as the crystallinity of the mixture is less than 10 %.

A heat stabilizer, a weatherability stabilizer, an antistatic agent, a pigment, a dye, a corrosion inhibitor, etc. of the kinds and amounts which do not impair the objects of this invention may be incorporated in one or more of the layers (A), (B) and (C) forming the laminated structure of this invention.

The laminated structure of this invention may, for example, be in the form of a film, sheet or bottle.

The laminated structure of this invention may be produced, for example, by a method which comprises melting the polymers for the three layers in different extruders, feeding the molten polymers into a die of a three-layer structure, and co-extruding them with the modified copolymer layer (B) as an interlayer, or a method (so-called sandwich laminate method) which comprises forming the polycarbonate layer (A) and the saponified ethylene/vinyl acetate copolymer layer (C) separately, and melt-extruding the modified copolymer as an interlayer into between the layers (A) and (C). If the laminated structure to be produced is in the form of a bottle, a keg, a pipe or a tube, the co-extrusion molding method can be used advantageously. Furthermore, the use of the co-extrusion molding method is preferred because it can easily give a high delamination strength.

The thickness of each of the layers of the laminated structure can be properly determined depending upon the end use of the laminated structure. Usually, if the laminated structure is a film or sheet, the layer (A) preferably has a thickness of 0.01 to 5 mm, and the layers (B) and (C) preferably have a thickness of 0.005 to 1 mm.

The laminated structure of this invention may comprise three layers (A), (B) and (C) or may comprise 5 or more layers additionally having polyolefin layers. An example of the multilayer laminate is one comprising, for example, the polycarbonate layer/the modified random copolymer layer/the saponified ethylene/vinyl acetate copolymer layer/the modified random copolymer layer/a polypropylene layer.

The laminated structure of this invention can be used, for example as film packaging materials or bottles for holding foods and medicines since it has transparency, flavor retaining property and heat resistance which are the characteristic features of polycarbonates and resistance to gas permeation which is the characteristic feature of the saponified olefin/vinyl acetate copolymer, and possesses a high delamination strength in the initial stage and after heat-treatment.

The following examples illustrate the present invention in greater detail. It should be understood that unless the invention departs from its scope described and claimed herein, it is not to be limited in any way to these examples.

**Example 1**

A five-layer water-cooled inflation film was produced under the following conditions by using maleic anhydride-grafted ethylene/propylene random copolymer (to be abbreviated to MAH.EPR-1; $MFR_2$ 0.5 g/10 min; the amount of maleic anhydride grafted 0.5 g/100 g of polymer; ethylene content 80 mole %; density 0.865 g/cm$^3$; crystallinity 4 %), polycarbonate (to be abbreviated to PC; tradename Panlite L-1250, a product of Teijin Chemical Co., Ltd.), and saponified ethylene/vinyl acetate copolymer (to be abbreviated to EVOH; $MFR_2$ 1.3 g/10 min., density 1.19 g/cm$^3$, ethylene content 32 mole %; tradename Kuraray Eval EP-F, a product of Kuraray Inc.).

Layer construction:

PC/MAH.EPR-1/EVOH/MAH.EPR-1/PC = 20/20/20/20/20 micrometers

Extruder:

40 mm∅. extruder 280°C (for Pc)
40 mm∅ extruder 210°C (for MAH.EPR-1)
40 mm∅ extruder 210°C (for EVOH)

Molding speed: 15 meters/min.

The interfacial adhesion strength ($F_{PC}$, g/15 mm width) between the PC layer and the MAH.EPR-1 layer of the resulting five-layer film, and the interfacial adhesion strength ($F_{EVOH}$, g/15 mm width) between the EVOH layer and the MAH.EPR-1 layer were measured by T-peel at a peeling speed of 300 mm/min. The five-layer film was autoclaved at 131°C for 1 hour, and then its interfacial adhesion strengths were measured as above. The transparency of the film was expressed by haze (%) measured in accordance with ASTM D1003. The results are shown in Table 1.

**Example 2**

Example 1 was repeated except that maleic anhydride-grafted ethylene/propylene random copolymer (to be abbreviated to MAH.EPR-2; $MFR_2$ 1.9 g/10 min; the amount of maleic anhydride grafted 0.1 g/100 g of polymer; ethylene content 80 mole %; density 0.864 g/cm$^3$; crystallinity 4 %) was used instead of MAH.EPR-1 used in Example 1. The results are shown in Table 1.

**Example 3**

Example 1 was repeated except that a composition ($MFR_2$ 1.1 g/10 min.; the amount of maleic anhydride grafted 0.25 g/100 g of polymer; ethylene content 80 mole %; density 0.865 g/cm$^3$; crystallinity 4 %) composed of 50 parts by weight of MAH.EPR-1 used in Example 1 and 50 parts by weigh; of unmodified ethylene /propylene random copolymer (to be abbreviated to EPR-1; $MFR_2$ 2.0 g/10 min; ethylene content 80 mole %; density 0.864 g/cm$^3$; crystallinity 4 %) was used instead of MAH.EPR-1 used in Example 1. The results are shown in Table 1.

**Example 4**

Example 1 was repeated except that a composition ($MFR_2$ 1.4 g/10 min; the amount of maleic anhydride grafted 0.25 g/100 g of polymer; density 0.874 g/cm$^3$; crystallinity 9 %) composed of 50 parts by weight of MAH.EPR-1 used in Example 1 and 50 parts by weight of unmodified ethylene/1-butene random copolymer (to be abbreviated to EBR-1; $MFR_2$ 4.0 g/10 min; ethylene content 90 mole %; density 0.885 g/cm$^3$; crystallinity 16 %) was used instead of MAH.EPR-1 used in Example 1. The results are shown in Table 1.

**Example 5**

Example 1 was repeated except that a composition ($MFR_2$ 1.3 g/10 min; the amount of maleic anhydride grafted 0.25 g/100 g of polymer; density 0.874 g/cm; crystallinity 9 %) composed of 50 parts by weight of EPR-1 used in Example 3 and 50 parts by weight of maleic anhydride-grafted ethylene/1-butene random copolymer (to be abbreviated to MAH.EBR-1; MFR$_2$ 3.2 g/10 min; the amount of maleic anhydride grafted 0.5 g/100 g of polymer; ethylene content 90 mole %; density 0.885 g/cm$^3$; crystallinity 14 %) was used instead of MAH.EPR-1 used in Example 1. The results are shown in Table 1.

## Comparative Example 1

Example 1 was repeated except that EPR-1 used in Example 3 was used instead of MAH.EPR-1 used in Example 1. The results are shown in Table 1.

## Comparative Example 2

Example 1 was repeated except that MAH.EBR-1 used in Example 5 was used instead of MAH.EPR-1 used in Example 1. The results are shown in Table 1.

## Comparative Example 3

Example 1 was repeated except that maleic anhydride-grafted ethylene/vinyl acetate copolymer (abbreviated to MAH.EVA-1; MFR$_2$ 2.1 g/10 min; the amount of maleic anhydride grafted 0.3 g/10 min; vinyl acetate conent 19 mole %; density 0.94 g/cm$^3$; crystallinity 27 %) was used instead of MAH.EPR-1 used in Example 1. The results are shown in Table 1.

## Comparative Example 4

Example 1 was repeated except that maleic anhydride-grafted ethylene/propylene random copolymer (to be abbreviated to MAH.EPR-3; MFR$_2$ 4.3 g/10 min; the amount of maleic anhydride grafted 0.5 g/100 g of polymer; ethylene content 80 mole %; density 0.891 g/cm$^3$; crystallinity 14 %) was used instead of MAH.EPR-1 used in Example 1. The results are shown in Table 1.

## Comparative Example 5

Example 1 was repeated except that maleic anhydride-grafted propylene/ethylene random copolymer (to be abbreviated to MAH.PEc; MFR$_2$ 1.1 g/10 min; the amount of maleic anhydride grafted 0.9 g/100 g of polymer; ethylene content 35 mole %; density 0.872 g/cm$^3$; crystallinity 10 %) was used instead of MAH.EPR-1 used in Example 1. The results are shown in Table 1.

## Comparative Example 6

Example 1 was repeated except that maleic anhydride-grafted ethylene/propylene random copolymer (to be abbreviated to MAH.EPR-4; MFR$_2$ 2.9 g/10 min; the amount of maleic anhydride grafted 1.0 g/100 g of polymer; ethylene content 90 mole %; density 0.902 g/cm$^3$; crystallinity 40 %) was used instead of MAH.EPR-1 used in Example 1. The results are shown in Table 1.

**EP 0 202 954 B1**

**Table 1**

| Test Items | Example | | | | |
|---|---|---|---|---|---|
| | 1 | 2 | 3 | 4 | 5 |
| Before heat-treatment | | | | | |
| $F_{PC}$ (g/15 mm width) | 820 | 750 | 800 | 930 | 810 |
| $F_{EVOH}$ (g/15 mm width) | Peeling impossible | Peeling impossible | Peeling impossible | Peeling impossible | Peeling impossible |
| Haze (%) | 1.1 | 1.2 | 1.3 | 1.2 | 1.2 |
| After heat-treatment | | | | | |
| $F_{PC}$ (g/15 mm width) | 330 | 350 | 310 | 250 | 270 |
| $F_{EVOH}$ (g/15 mm width) | Peeling impossible | Peeling impossible | Peeling impossible | Peeling impossible | Peeling impossible |
| Haze (%) | 1.2 | 1.2 | 1.3 | 1.3 | 1.4 |

| Test Items | Comparative Example | | | | | |
|---|---|---|---|---|---|---|
| | 1 | 2 | 3 | 4 | 5 | 6 |
| Before heat-treatment | | | | | | |
| $F_{PC}$ (g/15 mm width) | 0 | 890 | 810 | 870 | 750 | 510 |
| $F_{EVOH}$ (g/15 mm width) | 0 | Peeling impossible | 520 | Peeling impossible | Peeling impossible | 540 |
| Haze (%) | 1.1 | 1.3 | 1.2 | 1.4 | 3.5 | 1.3 |
| After heat-treatment | | | | | | |
| $F_{PC}$ (g/15 mm width) | 0 | 120 | 30 | 110 | 150 | 20 |
| $F_{EVOH}$ (g/15 mm width) | 0 | Peeling impossible | 530 | Peeling impossible | Peeling impossible | 520 |
| Haze (%) | 1.4 | 1.4 | 1.3 | 1.5 | 3.7 | 1.4 |

**Claims**

1. A laminate comprising, laminated in the order stated:

(A) a layer of a polycarbonate;
(B) a layer of a modified ethylene/alpha-olefin random copolymer composed of a trunk ethylene/alpha-olefin random copolymer to which 0.01 to 10 % by weight, based on the trunk copolymer, of an unsaturated carboxylic acid or derivative thereof is grafted, the modified copolymer having an ethylene content of 75 to 95 mole %, a melt flow rate of 0.1 to 50 g/10 min, a density of 0.850 to 0.905 g/cm$^3$ and a crystallinity of less than 10 %; and
(C) a layer of a saponified olefin/vinyl acetate copolymer.

2. A laminate according to claim 1 wherein the amount of the unsaturated carboxylic acid or derivative thereof grafted is 0.1 to 5 % by weight.

3. A laminate according to claim 1 or 2 wherein the modified copolymer has an ethylene content of 77 to 93

7

mole %.

4. A laminate according to any one of the preceding claims wherein the modified copolymer has a melt flow rate of 0.2 to 20 g/10 min.

5. A laminate according to any one of the preceding claims wherein the modified copolymer has a density of 0.860 to 0.900 g/cm³.

6. A laminate according to any one of the preceding claims wherein the modified copolymer has a crystallinity of less than 7 %.

7. A laminate according to any one of the preceding claims wherein the polycarbonate has units derived from an aromatic dihydroxy compound or an alicyclic dihydroxy compound.

8. A laminate according to any one of the preceding claims wherein the saponified olefin/vinyl acetate copolymer has an olefin content of 15 to 60 mole % and a degree of saponification of at least 50 %.

9. A laminate according to any one of the preceding claims wherein the layer (A) has a thickness of 0.01 to 5 mm, the layer (B) has a thickness of 0.005 to 1 mm, and the layer (C) has a thickness of 0.005 to 1 mm.

10. A laminate according to any one of the preceding claims in the form of a film, sheet or bottle.

## Patentansprüche

1. Laminat, enthaltend aufeinander laminiert

(A) eine Schicht aus einem Polycarbonat;
(B) eine Schicht aus einem modifizierten Ethylen/α-Olefinstatistischen Copolymeren, bestehend aus einem statistischen Gerüstpolymeren von Ethylen und α-Olefin, auf das 0,01 bis 10 Gew.-%, bezogen auf das Gerüstcopolymere, einer ungesättigten Carbonsäure oder deren Derivat aufgepropft ist, das modifizierte Copolymere einen Ethylengehalt von 75 bis 95 mol-%, eine Fließgeschwindigkeit von 0,1 bis 50 g/10 min, eine Dichte von 0,850 bis 0,905 g/cm³ und eine Kristallinität von weniger als 10 % besitzt, und
(C) eine Schicht eines verseiften Olefin/Vinylacetat-Copolymeren.

2. Laminat nach Anspruch 1, wobei die Menge an aufgepropfter ungesättigter Carbonsäure oder deren Derivat 0,1 bis 5 Gew.-% beträgt.

3. Laminat nach Anspruch 1 oder 2, wobei das modifizierte Copolymere einen Ethylengehalt von 77 bis 93 mol-% besitzt.

4. Laminat nach einem der vorhergehenden Ansprüche, wobei das modifizierte Copolymere eine Schmelzgeschwindigkeit von 0,2 bis 20 g/10 min besitzt.

5. Laminat nach einem der vorhergehenden Ansprüche, wobei das modifizierte Copolymere eine Dichte von 0,860 bis 0,900 g/cm³ aufweist.

6. Laminat nach einem der vorhergehenden Ansprüche, wobei das modifizierte Copolymere eine Kristallinität von weniger als 7 % aufweist.

7. Laminat nach einem der vorhergehenden Ansprüche, wobei das Polycarbonat Einheiten enthält, die sich von einer aromatischen Dihydroxyverbindung oder einer alicyclischen Dihydroxyverbindung ableiten.

8. Laminat nach einem der vorhergehenden Ansprüche, wobei das verseifte Olefin/Vinylacetat-Copolymer einen Olefingehalt von 15 bis 60 mol-% und einen Verseifungsgrad von mindestens 50 % besitzt.

9. Laminat nach einem der vorhergehenden Ansprüche, wobei die Schicht (A) eine Stärke von 0,01 bis 5 mm, die Schicht (B) von 0,005 bis 1 mm und die Schicht (C) von 0,005 bis 1 mm besitzen.

10. Laminat nach einem der vorhergehenden Ansprüche in Form einer Folie, Platte oder Flasche.

## Revendications

1. Stratifié comprenant, stratifiées dans l'ordre indiqué:

(A) une couche d'un polycarbonate;
(B) une couche d'un copolymère statistique modifié éthylène/alpha-oléfine, comprenant un tronc de copolymère statistique éthylène/alpha-oléfine sur lequel on a greffé 0,01 à 10 % en poids, par rapport au tronc de copolymère, d'un acide carboxylique insaturé ou d'un de ses dérivés, le copolymère modifié ayant une teneur en éthylène comprise entre 75 et 95 % en mole, une vitesse d'écoulement à l'état fondu allant de 0,1 à 50 g/10 min, une masse volumique comprise entre 0,850 et 0,905 g/cm³ et une cristallinité inférieure à 10 %; et
(C) une couche d'un copolymère saponifié oléfine/acétate de vinyle.

2. Stratifié selon la revendication 1, dans lequel la quantité de l'acide carboxylique insaturé ou de son dérivé qui est greffée est de 0,1 à 5 % en poids.

3. Stratifié selon la revendication 1 ou 2, dans lequel le copolymère modifié possède une teneur en éthylène comprise entre 77 et 93 % en mole.

4. Stratifié selon l'une quelconque des revendications précédentes, dans lequel le copolymère modifié possède une vitesse d'écoulement à l'état fondu comprise entre 0,2 et 20 g/10 min.

5. Stratifié selon l'une quelconque des revendications précédentes, dans lequel le copolymère modifié possède une masse volumique comprise entre 0,860 et 0,900 g/cm$^3$.

6. Stratifié selon l'une quelconque des revendications précédentes, dans lequel le copolymère modifié possède une cristallinité inférieure à 7 %.

7. Stratifié selon l'une quelconque des revendications précédentes, dans lequel le polycarbonate possède des motifs provenant d'un composé aromatique dihydroxylé ou d'un composé alicyclique dihydroxylé.

8. Stratifié selon l'une quelconque des revendications précédentes, dans lequel le copolymère saponifié oléfine/acétate de vinyle possède une teneur en oléfine comprise entre 15 et 60 % en mole et un degré de saponification d'au moins 50 %.

9. Stratifié selon l'une quelconque des revendications précédentes, dans lequel la couche (A) possède une épaisseur de 0,01 à 5 mm, la couche (B) possède une épaisseur de 0,005 à 1 mm, et la couche (C) possède une épaisseur de 0,005 à 1 mm.

10. Stratifié selon l'une quelconque des revendications précédentes, sous la forme d'un film, d'une feuille ou d'une bouteille.